# EUROPEAN PATENT SPECIFICATION

(11) **EP 0 951 843 B1**
(45) Date of publication and mention of the grant of the patent: **21.05.2003**
(21) Application number: 98650091.6
(22) Date of filing: 22.12.1998
(51) Int. Cl.: A23L 1/315, A23B 4/06

(54) **A method for preparing a poultry product**
Verfahren zur Herstellung eines Geflügelprodukts
Procédé de préparation d'un produit à base de volaille

(30) Priority: 20.04.1998 IE 980298
(43) Date of publication of application: 27.10.1999
(73) Proprietor: Cahill, David, Howth, County Dublin (IE)
(72) Inventor: Cahill, David, Howth, County Dublin (IE)
(74) Representative: O'Brien, John Augustine

(56) References cited:
- GB-A- 2 269 083
- GB-A- 2 321 001
- US-A- 5 807 598

## Description

The invention relates to a method for preparing a poultry meat, especially chicken, food product.

In my GB-A-2269083 I have described a method for preparing a chicken food product in which excess crumb is removed from the formed meat pieces prior to delivery into a fryer. This has the considerable advantage of optimising fryer usage and in providing a consistent product.

This invention is directed towards the further optimisation of the production of such poultry pieces and improving the physical and organoleptic properties of poultry products produced.

### Statements of Invention

According to the invention there is provided a method for preparing a poultry meat product comprising the steps of:-
tempering frozen blocks of poultry pieces;
flaking the block of tempered poultry pieces into meat flakes;
mixing the meat flakes with water, protein, and binding agents;
mincing the mixture thus formed;
holding the minced mixture at a temperature of from -2°C to -5°C for a period of at least two hours;
forming the minced mixture into pieces of desired shape;
settling the formed pieces for a period of at least 10 seconds;
applying a predust to the settled formed pieces;
applying a batter to the predusted formed pieces;
at least partially cooking the predusted battered pieces; and
freezing the cooked pieces.

In a particularly preferred embodiment of the invention the minced mixture is held for a period of from 2 to 3 hours. Preferably the minced mixture is held at a temperature of from 0°C to -3°C.

In a preferred arrangement the formed pieces are settled for a period of from 15 to 20 seconds prior to application of a predust. Preferably the formed pieces are settled by leading the formed pieces along a conveyor to a pre-dusting station.

In one embodiment of the invention the method includes the step, after application of batter, of settling the battered pieces for a period of at least 10 seconds prior to cooking. Preferably, the battered pieces are settled for a period of at least 20 seconds prior to cooking.

In a preferred arrangement the battered pieces are settled by leading the battered pieces along a conveyor to a bath of hot cooking oil.

The invention also provides white meat food products whenever prepared by the method of the invention.

### Brief Description of the Drawings

The invention will be more clearly understood from the following description thereof given by way of example only with reference to the accompanying drawings, in which:-
Fig. 1 is a block diagram of the method of the invention;
Fig. 2 is a perspective view of apparatus used in a tempering step in the method of the invention;
Fig. 3 is a perspective view of a flaking apparatus used in the method of the invention;
Fig. 4 is a side, partially cross sectional view of the flaking apparatus of Fig. 3;

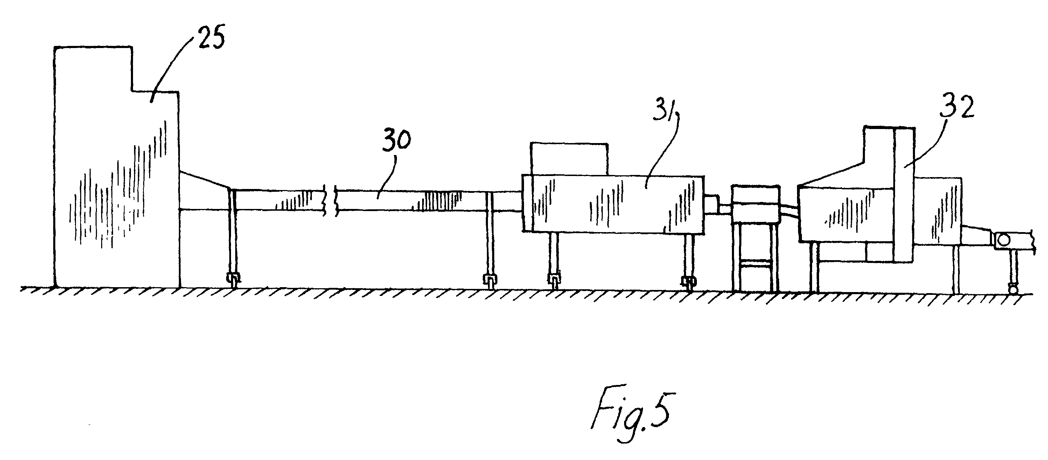

Fig. 5 is a side view of equipment used in various steps in the method of the invention;

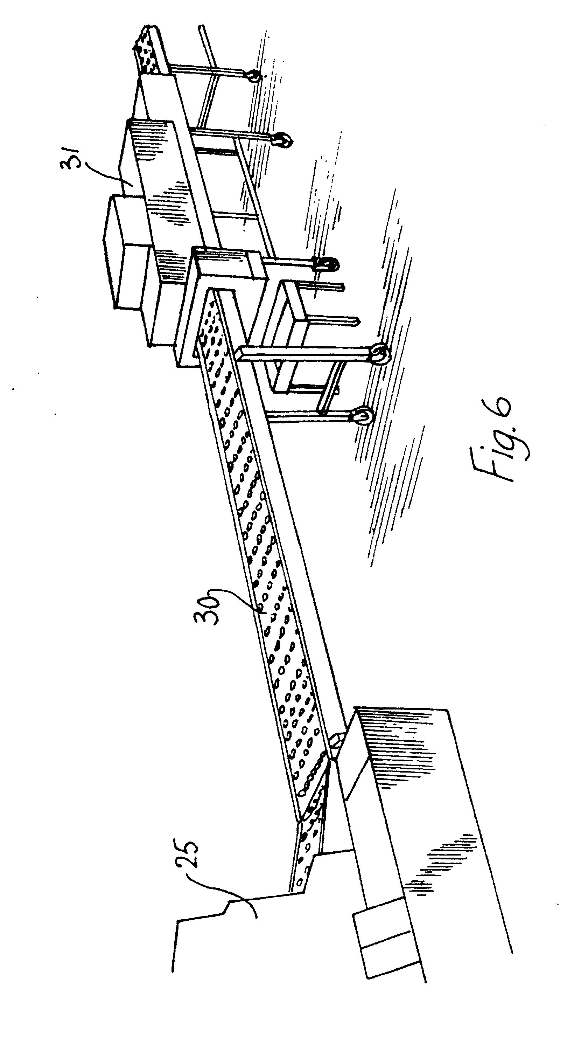

Fig. 6 is a perspective view of portion of the apparatus of Fig. 5;
Fig. 7 is a side view of a cooker and associated equipment used in a cooking step of the invention.
Fig. 8 is a side view of an alternative arrangement used in a cooking step of the invention; and
Fig. 9 is a perspective view of part of a conveyor used in the arrangement of Fig. 8.

### Detailed Description

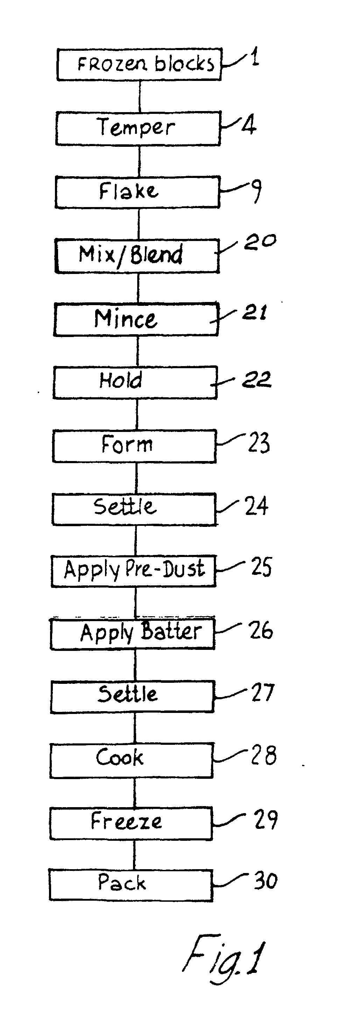

Referring to the drawings and initially to Fig. 1, there is illustrated a method for preparing a poultry food product according to the invention.

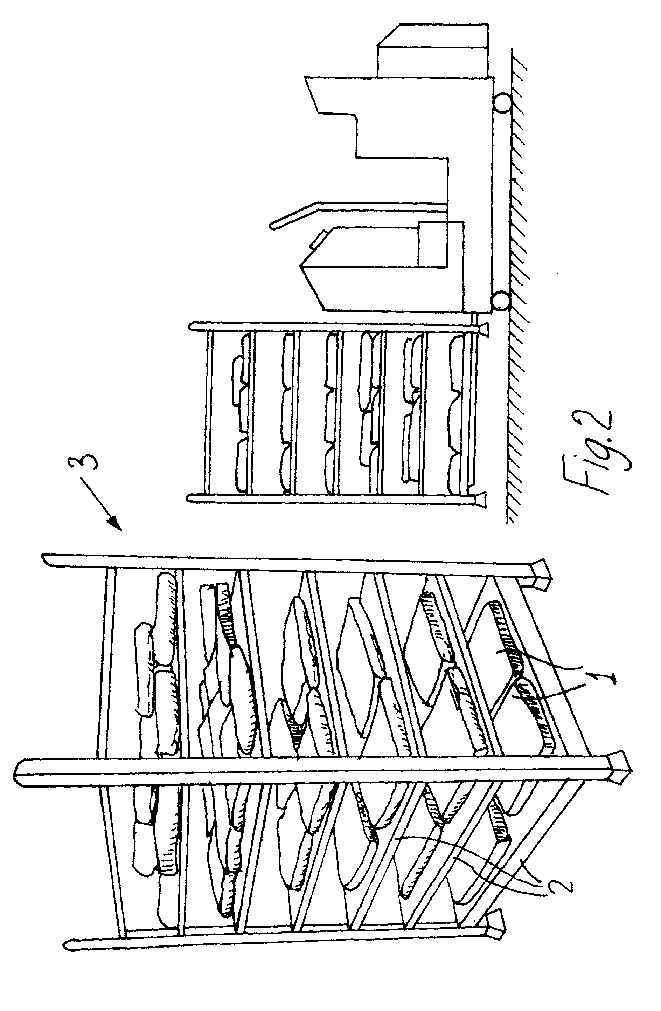

Frozen blocks 1 of poultry meat, typically white chicken meat, are arranged on shelves 2 of a tempering rack 3 as illustrated in Fig. 2 to allow for air circulation. The blocks 1 are tempered in step 4 on the racks 3 for a minimum period of 48 hours to bring the temperature of the blocks up from -20°C to between -10° and-12°C. The racks 3 used and the processing conditions for tempering ensure that an even tempering of the poultry meat is achieved in a highly efficient manner.

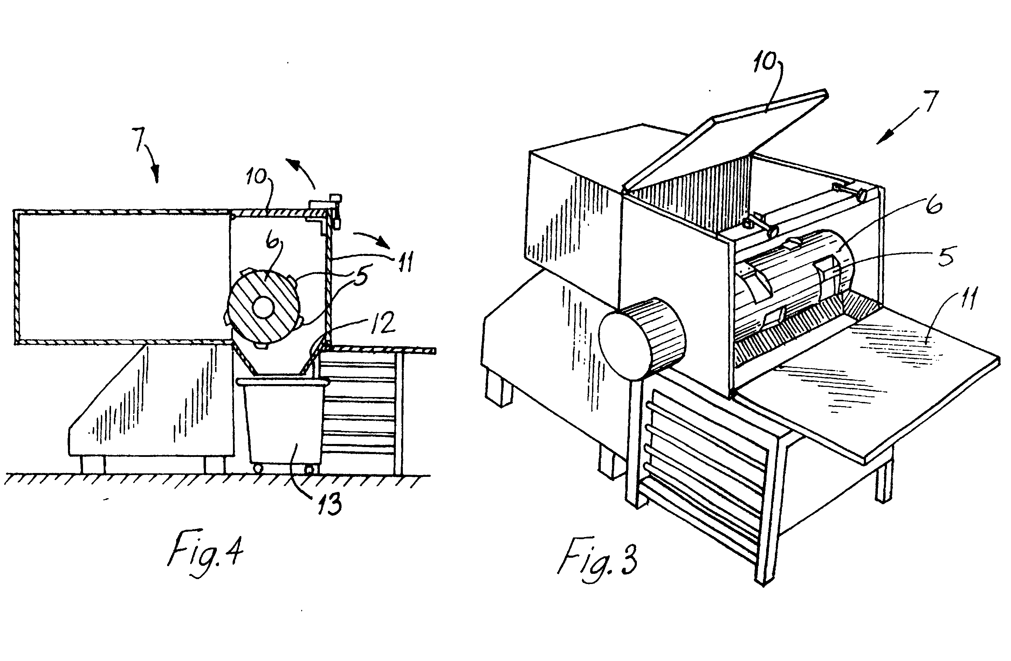

After tempering, a tempered block is flaked in step 9. The block 1 is delivered by a pusher ram to knives 5 on a rotating flaking drum 6 which is illustrated in Figs. 3 and 4. The flaking drum and knife arrangement is similar to that described in my GB-A-2269083. The flaking machine 7 includes access doors 10, 11 to facilitate cleaning. The flaked pieces are delivered through a discharge chute 12 into a tote holding bin 13.

Poultry skin is flaked in a similar manner and the flaked meat and skin is delivered from the tote bins 13 into a hopper feed of a paddle mixer, where they are mixed along with water, phosphate, salt and protein in a mixing/blending step 20. The mixing is carried out for a period of between 1 and 5 minutes, preferably between 2 and 4 minutes, and usually for about 3 minutes prior to mincing.

After mixing, the mixture is minced through a 3mm head in a mincing step 21 and the minced mixture is collected in a tote bin. The minced mixture is then transferred to a cold room in which the mixture is held at a temperature of from -2°C to -5°C for a period of at least 2 hours and, preferably, at a temperature of from 0°C to -3°C for a period of between 2 and 3 hours. I have found that this holding step 22 is particularly important in optimising the subsequent process steps. By virtue of the holding step easier forming of the mixture with less energy input is facilitated.

After holding 22 the minced mixture is delivered to a shaping/forming unit 25, in which the mixture is formed into pieces of desired shape in a forming step 23. The pieces may, for example, be formed into shapes such as nuggets, burgers and the like. After forming, the formed pieces are settled in a settling step 24 for a period of at least 10 seconds, preferably for a period of from 15 to 20 seconds. In this case the formed pieces are settled most efficiently by leading them along an elongated conveyor 30.

A predust is applied to the settled formed pieces in a pre-dusting step 25, using a predusting unit 31. After predusting, batter is applied in one or more stages in a battering step 26 using a batter applicator 32. Various other steps such as additional battering, crumb coating etc may also be used, however they are not described in detail as they are not an essential part of this invention. Subsequent to the battering step 26, the battered product are further settled in a settling step 27 for a period of at least 10 seconds and preferably approximately 20 seconds prior to cooking. The settling is most efficiently achieved by leading the battered formed pieces along a settling conveyor 36 prior to delivery into a fryer 39 in which the meat pieces are flash fried in a cooking step 28 at a temperature of at least 185°C for a period of not less than 20 seconds. This is a partial cook. After frying, the poultry meat pieces are frozen, for example, in a spiral freezer 38 in a freezing step 29 prior to packaging in step 30.

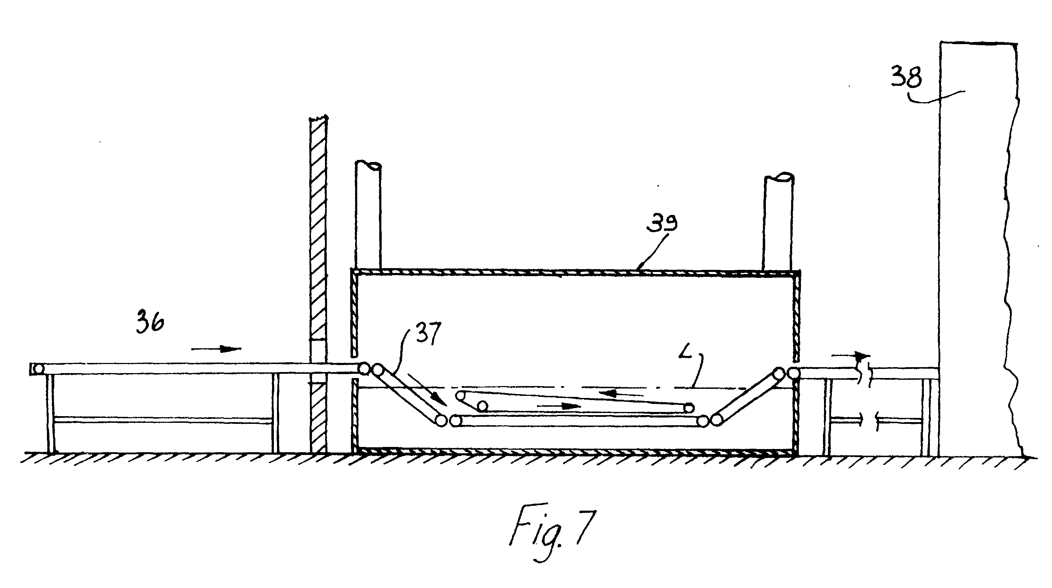

In the arrangement illustrated in Fig. 7 the battered poultry pieces are delivered directly from the conveyor 36 to an in-feed conveyor 37 which is partially immersed in and delivers the battered pieces into cooking oil, which is shown at a level L in the drawing.

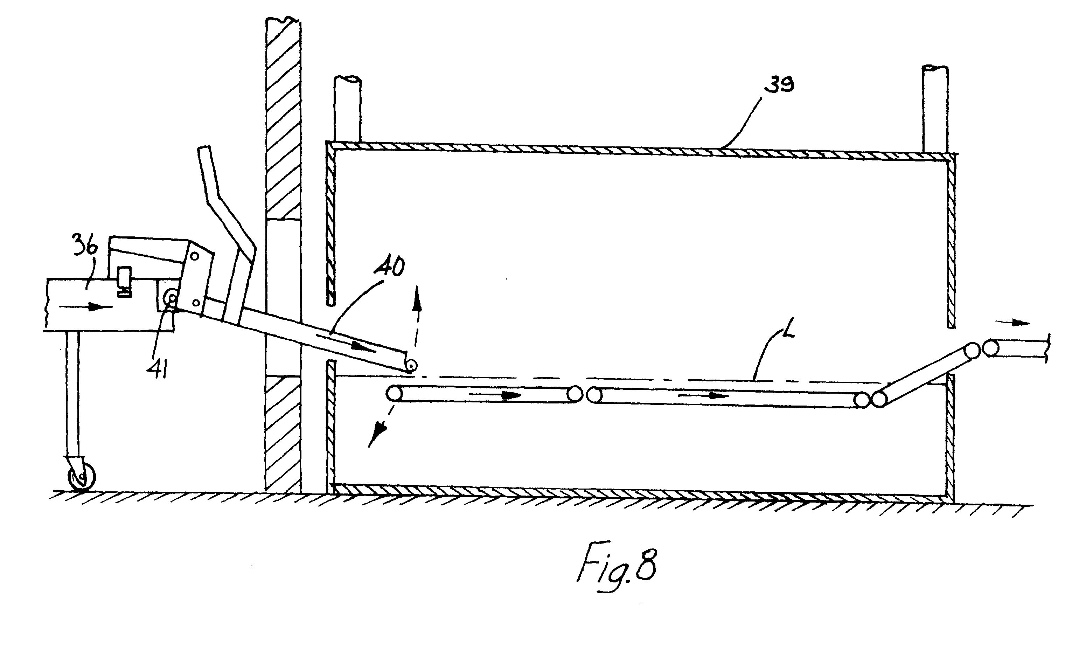

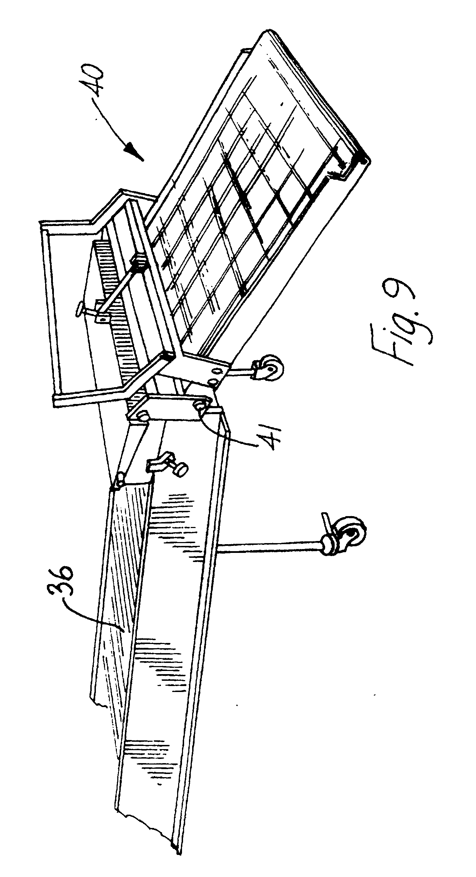

In an alternative arrangement illustrated in Figs. 8 and 9, the settling conveyor 36 includes a discharge section 40 which is pivotally mounted at 41 for angular adjustment with respect to the main body of the conveyor 36. In use, the discharge portion 40 of the conveyor is adjusted so that the discharge end of the conveyor section 40 is not immersed in, but lies just above, the level L of the cooking oil in the fryer 39. In this way, the cooking of the product is even more closely controlled as there is no precooking by the product encountering a hot section of conveyor prior to immersion in the cooking oil. This is particularly important for products with a light batter which can be easily damaged, destroying their physical and organoleptic properties.

I have found that the new method described above offers considerable advantages over the prior art and in particular assists in optimising the process for preparing poultry meat pieces.

## Claims

1. A method for preparing a poultry food product comprising the steps of:-
tempering (4) frozen blocks (1) of poultry pieces;
flaking (9) the block (1) of tempered poultry pieces into meat flakes;
mixing (20) the meat flakes with water, protein, and binding agents;
mincing (21) the mixture thus formed;
holding (22) the minced mixture at a temperature of from -2°C to-5°C for a period of at least two hours;
forming (23) the minced mixture into pieces of desired shape;
settling (24) the formed pieces for a period of at least 10 seconds;
applying (25) a predust to the settled formed pieces;
applying (26) a batter to the predusted formed pieces;
at least partially cooking (28) the predusted battered pieces; and
freezing (29) the cooked pieces.

2. A method as claimed in claim 1 wherein the minced mixture is held for a period of from 2 to 3 hours.

3. A method as claimed in claim 2 wherein the minced mixture is held at a temperature of from 0°C to -3°C.

4. A method as claimed in any preceding claim wherein the formed pieces are settled for a period of from 15 to 20 seconds prior to application of a predust.

5. A method as claimed in an preceding claim wherein the formed pieces are settled by leading the formed pieces along a conveyor (30) to a pre-dusting station.

6. A method as claimed in any preceding claim including the step, after application of batter, of settling the battered pieces for a period of at least 10 seconds prior to cooking.

7. A method as claimed in claim 6 wherein the battered pieces are settled for a period of at least 20 seconds prior to cooking.

8. A method as claimed in claim 6 or 7 wherein the battered pieces are settled by leading the battered pieces along a conveyor (36) to a bath (39) of hot cooking oil.

9. A method as claimed in claim 8 wherein the battered pieces are led into the oil from the conveyor (36) without the conveyor (36) itself contacting the oil.

## Patentansprüche

1. Verfahren zum Zubereiten eines Geflügel-Nahrungsmittelproduktes umfasssend die Schritte von:
Temperieren (4) gefrorener Blöcke (1) aus Geflügelstücken;
Zerteilen (9) des Blockes (1) aus temperierten Geflügelstücken in kleine Fleischstückchen;
Mischen (20) der kleinen Fleischstückchen mit Wasser, Protein und Bindemitteln;
Zerhacken (21) des auf diese Weise geformten Gemisches;
Halten (22) des zerhackten Gemisches bei einer Temperatur von -2 °C bis -5 °C für eine Zeitdauer von mindestens zwei Stunden;
Formen (23) des zerhackten Gemisches in Stücke von gewünschter Form;
Setzen (24) der geformten Stücke für eine Zeitdauer von mindestens 10 Sekunden;
Aufbringen (25) einer Vorbestäubung auf die gesetzten geformten Stücke;
Aufbringen (26) eines Teiges auf die vorbestäubten, geformten Stücke;
mindestens teilweises Kochen (28) der vorbestäubten, von Teig umhüllten Stücke und
Gefrieren (29) der gekochten Stücke.

2. Verfahren nach Anspruch 1, worin das zerhackte Gemisch fiir eine Zeitdauer von 2 bis 3 Stunden gehalten wird.

3. Verfahren nach Anspruch 2, worin das zerhackte Gemisch bei einer Temperatur von 0 °C bis -3 °C gehalten wird.

4. Verfahren nach einem der vorangehenden Ansprüche, worin sich die geformten Stücke fiir eine Zeitdauer von 15 bis 20 Sekunden vor dem Aufbringen einer Vorbestäubung setzen können.

5. Verfahren nach einem der vorangehenden Ansprüche, worin sich die geformten Stücke durch Leiten der geformten Stücke entlang einem Transportband (30) an eine Vorbestäubungsstation setzen können.

6. Verfahren nach einem der vorangehenden Ansprüche, einschließlich des Schrittes, nach Applikation des Teiges, des Setzenlassens der von Teig umhüllten Stücke für eine Zeitdauer von mindestens 10 Sekunden vor dem Kochen.

7. Verfahren nach Anspruch 6, worin sich die von Teig umhüllten Stücke für eine Zeitdauer von mindestens 20 Sekunden vor dem Kochen setzen können.

8. Verfahren nach Anspruch 6 oder 7, worin sich die von Teig umhüllten Stücke durch Leiten der von Teig umhüllten Stücke entlang einem Transportband (36) an ein Bad (39) aus heißem Öl zum Kochen setzen können.

9. Verfahren nach Anspruch 8, worin die von Teig umhüllten Stücke von dem Transportband (36) in das Öl geleitet werden, ohne dass das Transportband (36) selbst mit dem Öl in Kontakt kommt.

## Revendications

1. Procédé pour préparer un produit alimentaire de volaille comprenant les étapes consistant à :
laisser réchauffer (4) des blocs congelés (1) de morceaux de volaille;
émietter (9) le bloc (1) de morceaux de volaille réchauffés en des miettes de viande;
mélanger (20) les miettes de viande avec de l'eau, des protéines et des agents de liaison;
hacher (21) le mélange ainsi formé;
conserver (22) le mélange haché à une température de -2°C à -5°C pendant une période de deux heures au moins;
former (23) le mélange haché en des morceaux d'une forme désirée;
laisser reposer (24) les morceaux formés pendant une période de 10 secondes au moins;
appliquer (25) un pré-saupoudrage aux morceaux formés reposés;
appliquer (26) une pâte à frire aux morceaux formés pré-saupoudrés;
cuire au moins partiellement (28) les morceaux pré-saupoudrés enrobés de pâte à frire; et
congeler (29) les morceaux cuits.

2. Procédé tel que revendiqué dans la revendication 1, dans lequel le mélange haché est conservé pendant une période de 2 à 3 heures.

3. Procédé tel que revendiqué dans la revendication 2, dans lequel le mélange haché est conservé à une température de 0°C à -3°C.

4. Procédé tel que revendiqué dans l'une quelconque des revendications précédentes, dans lequel on laisse reposer les morceaux formés pendant une période de 15 à 20 secondes avant l'application d'un pré-saupoudrage.

5. Procédé tel que revendiqué dans l'une quelconque des revendications précédentes, dans lequel on laisse reposer les morceaux formés en amenant les morceaux formés le long d'un transporteur (30) à un poste de pré-saupoudrage.

6. Procédé tel que revendiqué dans l'une quelconque des revendications précédentes comprenant, suite à l'application de pâte à frire, l'étape consistant à laisser reposer les morceaux enrobés de pâte à frire pendant une période de 10 secondes au moins avant la cuisson.

7. Procédé tel que revendiqué dans la revendication 6, dans lequel on laisse reposer les morceaux enrobés de pâte à frire pendant une période de 20 secondes au moins avant la cuisson.

8. Procédé tel que revendiqué dans la revendication 6 ou 7, dans lequel on laisse reposer les morceaux enrobés de pâte à frire en amenant les morceaux enrobés de pâte à frire le long d'un transporteur (36) à un bain (39) d'huile alimentaire chaude.

9. Procédé tel que revendiqué dans la revendication 8, dans lequel les morceaux enrobés de pâte à frire sont amenés dans l'huile depuis le transporteur (36) sans que le transporteur (36) même n'entre en contact avec l'huile.
